# EUROPEAN PATENT SPECIFICATION

(11) **EP 4 571 241 B1**
(45) Date of publication and mention of the grant of the patent: **29.07.2026**
(21) Application number: 24219000.7
(22) Date of filing: 11.12.2024
(51) Int. Cl.: G01B 9/02055

(54) **PHASE MODULATOR SUITABLE FOR SPECKLE REMOVAL IN FULL-FIELD EYE IMAGING, INTERFEROMETER AND A METHOD OF SPECKLE REMOVAL IN FULL-FIELD EYE IMAGING**
PHASENMODULATOR ZUR SPECKLE-ENTFERNUNG IN DER VOLLFELD-AUGENABBILDUNG, INTERFEROMETER UND VERFAHREN ZUR SPECKLE-ENTFERNUNG IN DER VOLLFELD-AUGENABBILDUNG
MODULATEUR DE PHASE APPROPRIÉ POUR L'ÉLIMINATION DE TACHES DANS L'IMAGERIE DE L' IL PLEIN CHAMP, INTERFÉROMÈTRE ET PROCÉDÉ D'ÉLIMINATION DE TACHES DANS L'IMAGERIE DE L' IL PLEIN CHAMP

(30) Priority: 12.12.2023 EP 23461686
(43) Date of publication of application: 18.06.2025
(73) Proprietor: Instytut Chemii Fizycznej Polskiej Akademii Nauk, 01-224 Warszawa (PL)
(72) Inventor: WOJTKOWSKI, Maciej, 01-224 Warszawa (PL); WEGRZYN, Piotr, 01-224 Warszawa (PL); MIKULA-ZDANKOWSKA, Marta, 01-224 Warszawa (PL)
(74) Representative: AOMB Polska Sp. z.o.o.

(56) References cited:
- US-A1- 2008 007 733
- US-A1- 2010 053 632

## Description

### TECHNICAL FIELD

The invention relates to a phase modulator suitable for speckle removal in full-field eye imaging, an interferometer comprising the phase modulator and a method of speckle removal in full-field eye imaging.

### BACKGROUND ART

In the Full-Field OCT eye imaging protocol one of the methods of eliminating or significantly decreasing the level of speckles in the interferogram combined on the detector from the signal and reference beams is defining the image acquisition time long enough to obtain a speckle pattern washout effect caused automatically by the reflexive eye movements of the patient under test.

In the situation when a shorter image acquisition time is desired, these eye movements become too slow in comparison to the acquisition and appear static in the timescale of the measurement and, as a consequence, fail to remove the speckle pattern from the image.

EP2513595B1 provides a method and a distance meter that can determine properties of a speckle field with only one single wavelength or with more than one wavelength at the same time or without a change of wavelengths. This technique avoids the distance errors caused by phase decorrelation effects and compensates for the pointing direction errors by calculating the centroid of the measurement. The method allows for a compensation or correction of phase decorrelation errors by resolving the speckle field with the granularity or resolution of the distribution of points. The invention provides a significant enhancement of measurement accuracy in situations where the target is tilted with respect to the optical axis. The wavelength dependency of the speckle phase depends on the static light distribution at a certain wavelength, and the measurement error caused by the stochastic phase-change can be compensated by a proper choice of pointing direction. The patent discusses a problem with interferometric distance meters called speckle mitigation, which can cause measurement accuracy issues due to stochastic measurement fluctuations caused by target roughness and tilt. The document describes various methods for addressing this issue, including the use of absolute distance meters that measure multiple wavelengths simultaneously. The technical problem is how to improve the accuracy of interferometric distance measurements in the presence of speckle mitigation.

EP2816315B1 describes an improved interferometric measuring device that uses a laser diode with moderate coherence. This device can measure changes in distance accurately over a long range, even with a low-cost laser diode. Additionally, the device can be easily compensated for long range changes in distance. The technical problem addressed in this patent is the limited coherence length of laser diodes and the impact of optical feedback on interferometers for long range measurement of distances or changes of distance to a target. The patent proposes using laser diodes with great coherence lengths or other beam sources like gas lasers to overcome these limitations.

US20140368832A1 describes a method for accurately detecting changes in distance to an object using optical interferometry. This is achieved through a process called quadrature detection, which allows for the differentiation between increasing and decreasing distance change. The method also includes using a specified signal processing concept and a low-noise current source to reduce noise in the frequency spectrum. The technical effects of this patent include improved accuracy and reliability in detecting changes in distance to an object, which can be useful in various applications such as industrial metrology and material science research. The technical problem addressed in this document is the limitations of laser diodes in terms of frequency stability and coherence length, which affect the accuracy and precision of interferometer measurements.

### SUMMARY

Thus there is still a need to provide a method and an interferometer for eliminating the level of speckles in the interferogram. The purpose of the invention is also to provide a method which is repeatable and able to control the phase modification process avoiding a need of relying on the reflexive eye movements of the patient which can vary depending on the circumstances.

Above mentioned problem is solved by the phase modulator inserted into the detector leg of the interferometer to mimic the eye movements effect by introducing a small phase modulation to the signal component only.

The invention is defined in claim 1.

There is provided an phase modulator suitable for speckle removal in full-field eye imaging, wherein the component is a transmissive glass plate having two sections: an inner in the center of the component which is polished and flat, and an outer section, which is in a form of a ring and has its surface roughened to the level of 2π, which in the near infrared spectral region corresponds to 0,7-1 µm of surface roughness amplitude.

Preferably wherein the outer section is modified throughout the volume to form a net optical path modification of 2π, which in the near infrared spectral region corresponds to 0,7-1 µm, to the transmitted beam by changing the effective refractive index of the optic.

Further, there is provided an interferometer for speckle removal in full-field eye imaging comprising a phase modulator as set out in claim 1. An interferometer for speckle removal in full-field eye imaging comprising a detector, a light source arranged to produce two beams using a beamsplitter, the first a signal beam, directed to the measured object and the second reference beam, lenses, and a phase modulator according to claim 1, wherein the phase modulator is placed in the detector leg in the position in which the signal beam has a broader cross-section compared to the collinear reference beam, and wherein the phase modulator is arranged to allow rotation in the axis perpendicular to the light beam, the signal beam and the reference beam are arranged that the reference beam is focused and passes only through the polished central section of the phase modulator while the signal beam passes through the entire available aperture of the phase modulator, being subject to phase modulation caused by the roughened surface of the phase modulator, and wherein the signal beam and the reference beam are arranged that the signal beam and the reference beam are collinear but spatially separated due to different beam cross-sections to the extent that allows to perform phase manipulations to only one of them without disturbing another while maintaining the same common gross phase shift coming from the phase modulator thickness.

Further, there is provided a method for speckle removal in full-filed eye imaging in the interferometer comprising the phase modulator according to claim 1. A method of speckle removal in full-field eye imaging performed in the interferometer according to claim 3, comprising: sending the signal beam to the object to be measured, sending the reference beam to the reference mirror, transmission of the signal beam and a reference beam through the phase modulator in the detection path, receiving the transmitted signal by detector, wherein the phase modulator is rotating while the data acquisition, and wherein the signal beam and the reference beam are collinear but spatially separated by means of different cross-sections in at least one position along the beam, and wherein the signal beam is transmitted through the outer section of the phase modulator and the reference beam is transmitted through the inner section of the phase modulator.

Advantageously, the method provides a shortening of the acquisition time in the Full-Field OCT method while still removing the speckles from the image by introducing phase modulations to the signal beam. Additional advantages are repeatability and control of the phase modification process avoiding a need of relying on the reflexive eye movements of the patient which can vary depending on the circumstances.

### BRIEF DESCRIPTION OF THE DRAWINGS

In order to best describe the manner in which the above-described embodiments are implemented, as well as defined other advantages and features of the disclosure, a more particular description is provided below and is illustrated in the appended drawings. Understanding that these drawings depict only exemplary embodiments of the invention and are not therefore to be considered to be limiting in scope, the examples will be described and explained with additional specificity and detail through the use of the accompanying drawings in which:
Fig. 1 Front view of the phase modulator
Fig. 2 Side view of the phase modulator
Fig. 3 Two embodiments of the phase modulation: volume- and surface-based
Fig. 4 Schematic of the Full-Field OCT system. The phase modulator is inserted in the detection leg of the interferometer where the reference beam is focused as opposed to the signal beam

### DETAILED DESCRIPTION

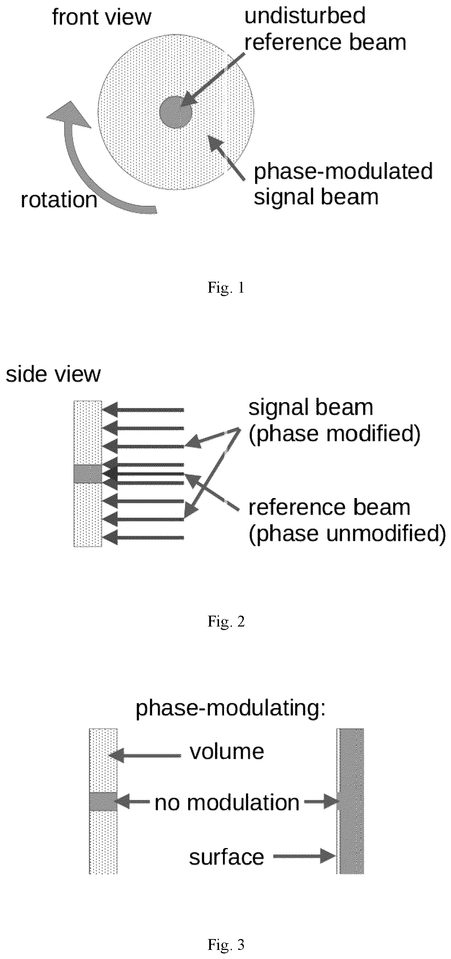

Fig. 1 presents the phase modulator embodying the invention. The phase modulator is a transmissive glass plate. The phase modulator has two sections - the inner, near the center, where the reference beam is transmitted. This section is polished flat. The second, outer section, in a form of the outer ring, where the majority of the signal beam is transmitted, has its surface slightly uneven on the roughness level of 2π (in the near infrared spectral region corresponding to 0.7-1 µm of amplitude).

In Fig. 2 is presented side view of the phase modulator where the reference beam pass is significantly focused and passes only through the polished central section of the phase modulator while the signal beam passes through the entire available aperture of the phase modulator, being subject to phase modulation caused by the roughened surface of the phase modulator. Using two sections in this way introducing optical phase delays that contribute to speckle removal.

Fig. 3 presents two embodiments of the phase modulator. One of them has only slightly uneven surface on the roughness level of 2π. Another type of the phase modulator plate applicable for the speckle removal has its volume modified in terms of introducing disturbances or foreign material which would form a net optical path modification of the order of 2π to the transmitted beam by changing the effective refractive index of the optic.

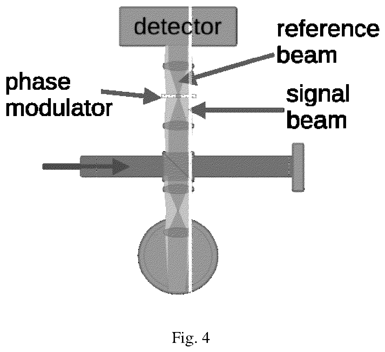

Fig. 4 presents schematic of the Full-Field OCT system. The interferometer for speckle removal in full-field eye imaging comprising a detector, a light source arranged to produce two beams using a beamsplitter: the signal beam directed to the measured object and the reference beam, a number of lenses, and a phase modulator.

The phase modulator is placed in the detector leg of the interferometer in the position in which the signal beam has a much broader cross-section compared to the collinear reference beam. This way these two interfering beams are spatially separated to the extent that allows to perform phase manipulations to only one of them without disturbing another while maintaining the same common phase shift coming from the phase modulator thickness.

The reference beam is significantly focused and passes only through the polished inner section of the phase modulator while the signal beam passes through the entire available aperture of the phase modulator, being subject to phase modulation caused by the roughened surface of the phase modulator. The phase modulator is arranged to allow rotation in the axis perpendicular to the light beam, so the phase delays are variable in time during the data acquisition.

The signal beam and a reference beam are arranged that the signal beam and the reference beam are collinear but spatially separated due to different beam cross-sections to the extent that allows to perform phase manipulations to only one of them without disturbing another while maintaining the same common gross phase shift coming from the phase modulator thickness.

The interferometer allows to perform a method of speckle removal in full-field eye imaging. In the first step of the method a light source produces two beams using a beamsplitter. One of them, the signal beam is steered to the object to be measured and the other, the reference beam is steered to the reference mirror. The signal beam and the reference beam in the detector leg of the interferometer are collinear but spatially separated by means of different cross-sections in at least one position along the beam. The signal beam is transmitted through the outer section of the phase modulator and the reference beam is transmitted through the inner section of the phase modulator. The signal beam and a reference beam are transmitted through the phase modulator in the detection path and the transmitted signal is received by detector. The phase modulator is rotating during the data acquisition.

## Claims

1. Phase modulator suitable for speckle removal in full-field eye imaging, wherein the phase modulator is a transmissive glass plate having two sections:
an inner in the center of the phase modulator which is polished and flat, and
an outer section, which is in a form of a ring and has its surface roughened to the level of 2π, which in the near infrared spectral region corresponds to 0,7-1 µm of surface roughness amplitude.

2. The phase modulator according to claim 1, wherein the outer section is modified throughout the volume to form a net optical path modification of 2π, which in the near infrared spectral region corresponds to 0,7-1 µm, to the transmitted beam by changing the effective refractive index of the optic.

3. An interferometer for speckle removal in full-field eye imaging comprising:
- a detector,
- a light source arranged to produce two beams using a beamsplitter, the first a signal beam, directed to the measured object and the second reference beam,
- lenses, and
- a phase modulator according to claim 1,
wherein the phase modulator is placed in the detector leg in the position in which the signal beam has a broader cross-section compared to the collinear reference beam, and
wherein the phase modulator is arranged to allow rotation in the axis perpendicular to the light beam,
wherein the signal beam and the reference beam are arranged that the reference beam is focused and passes only through the polished central section of the phase modulator while the signal beam passes through the entire available aperture of the phase modulator, being subject to phase modulation caused by the roughened surface of the phase modulator, and
wherein the signal beam and the reference beam are arranged that the signal beam and the reference beam are collinear but spatially separated due to different beam cross-sections to the extent that allows to perform phase manipulations to only one of them without disturbing another while maintaining the same common gross phase shift coming from the phase modulator thickness.

4. A method of speckle removal in full-field eye imaging performed in the interferometer according to claim 2, comprising:
a) sending the signal beam to the object to be measured,
b) sending the reference beam to the reference mirror,
c) transmission of the signal beam and a reference beam through the phase modulator in the detection path,
d) receiving the transmitted signal by detector,
wherein the phase modulator is rotating while the data acquisition, and
wherein the signal beam and the reference beam are collinear but spatially separated by means of different cross-sections in at least one position along the beam, and
wherein the signal beam is transmitted through the outer section of the phase modulator and the reference beam is transmitted through the inner section of the phase modulator.

## Patentansprüche

1. Phasenmodulator zur Speckle-Entfernung bei der Vollfeld-Augenbildgebung, wobei der Phasenmodulator eine durchlässige Glasplatte mit zwei Abschnitten ist:
einem inneren, polierten und ebenen Abschnitt in der Mitte des Phasenmodulators und
einem äußeren, ringförmigen Abschnitt mit einer bis zu 2π aufgerauten Oberfläche, was im nahen Infrarotbereich einer Oberflächenrauheitsamplitude von 0,7-1 µm entspricht.

2. Der Phasenmodulator nach Anspruch 1, wobei der äußere Abschnitt über das gesamte Volumen so modifiziert ist, dass durch Änderung des effektiven Brechungsindex der Optik eine Nettoänderung des optischen Weges des transmittierten Strahls um 2π, was im nahen Infrarot-Spektralbereich 0,7-1 µm entspricht, erreicht wird.

3. Ein Interferometer zur Speckle-Entfernung bei der Vollfeld-Augenbildgebung, umfassend:
- einen Detektor,
- eine Lichtquelle, die mittels eines Strahlteilers zwei Strahlen erzeugt, wobei der erste ein Signalstrahl ist, der auf das Messobjekt gerichtet ist, und der zweite ein Referenzstrahl,
- Linsen und
- einen Phasenmodulator nach Anspruch 1,
wobei der Phasenmodulator im Detektorschenkel an der Stelle angeordnet ist, an der der Signalstrahl einen größeren Querschnitt als der kollineare Referenzstrahl aufweist, und
wobei der Phasenmodulator eine Drehung um die Achse senkrecht zum Lichtstrahl ermöglicht,
wobei Signal- und Referenzstrahl so angeordnet sind, dass der Referenzstrahl fokussiert wird und nur den polierten Mittelteil des Phasenmodulators durchdringt, während der Signalstrahl die gesamte verfügbare Apertur des Phasenmodulators durchdringt und einer Phasenmodulation durch die aufgeraute Oberfläche des Phasenmodulators unterliegt, und
wobei Signal- und Referenzstrahl so angeordnet sind, dass sie kollinear, aber aufgrund unterschiedlicher Strahlquerschnitte räumlich getrennt sind. in dem Maße, dass Phasenmanipulationen nur an einem der beiden Elemente vorgenommen werden können, ohne das andere zu beeinträchtigen, während die gleiche gemeinsame Gesamtphasenverschiebung, die durch die Dicke des Phasenmodulators entsteht, beibehalten wird.

4. Verfahren zur Speckle-Entfernung bei der Vollfeld-Augenbildgebung mittels Interferometer nach Anspruch 2, umfassend:
a) Senden des Signalstrahls auf das zu messende Objekt,
b) Senden des Referenzstrahls auf den Referenzspiegel,
c) Transmission des Signalstrahls und eines Referenzstrahls durch den Phasenmodulator im Detektionspfad,
d) Empfangen des transmittierten Signals durch einen Detektor,
wobei sich der Phasenmodulator während der Datenerfassung dreht, und
wobei Signalstrahl und Referenzstrahl kollinear, aber räumlich durch unterschiedliche Querschnitte an mindestens einer Position entlang des Strahls getrennt sind, und
wobei der Signalstrahl durch den äußeren Abschnitt des Phasenmodulators und der Referenzstrahl durch den inneren Abschnitt des Phasenmodulators transmittiert wird.

## Revendications

1. Modulateur de phase adapté à la suppression du speckle en imagerie oculaire plein champ, **caractérisé en ce que** le modulateur de phase est une plaque de verre transparente comportant deux sections :
une section interne, polie et plane, située au centre du modulateur de phase, et
une section externe annulaire dont la surface est rugueuse au niveau de 2π, ce qui, dans le proche infrarouge, correspond à une amplitude de rugosité de 0,7 à 1 µm.

2. Modulateur de phase selon la revendication 1, **caractérisé en ce que** la section externe est modifiée sur toute son épaisseur afin d'induire une modification nette du trajet optique de 2π, correspondant à une amplitude de 0,7 à 1 µm dans le proche infrarouge, pour le faisceau transmis, par modification de l'indice de réfraction effectif de l'optique.

3. Un interféromètre pour la suppression du speckle en imagerie oculaire plein champ, comprenant :
- un détecteur,
- une source lumineuse agencée pour produire deux faisceaux à l'aide d'un séparateur de faisceau, le premier étant un faisceau de signal dirigé vers l'objet mesuré et le second un faisceau de référence,
- des lentilles, et
- un modulateur de phase selon la revendication 1,
le modulateur de phase étant placé dans la branche du détecteur de manière à ce que le faisceau de signal ait une section transversale plus large que le faisceau de référence colinéaire,
le modulateur de phase étant agencé de façon à permettre une rotation autour de l'axe perpendiculaire au faisceau lumineux,
le faisceau de signal et le faisceau de référence étant agencés de telle sorte que le faisceau de référence soit focalisé et ne traverse que la partie centrale polie du modulateur de phase, tandis que le faisceau de signal traverse toute l'ouverture disponible du modulateur de phase, subissant une modulation de phase due à la surface rugueuse de ce dernier,
le faisceau de signal et le faisceau de référence étant colinéaires mais spatialement séparés par leurs sections transversales différentes, dans la mesure permettant d'effectuer une modulation de phase manipulations sur un seul d'entre eux sans perturber l'autre tout en maintenant le même déphasage brut commun provenant de l'épaisseur du modulateur de phase.

4. Procédé de suppression du speckle en imagerie oculaire plein champ réalisé dans l'interféromètre selon la revendication 2, comprenant :
a) l'envoi du faisceau de signal vers l'objet à mesurer,
b) l'envoi du faisceau de référence vers le miroir de référence,
c) la transmission du faisceau de signal et du faisceau de référence à travers le modulateur de phase dans le trajet de détection,
d) la réception du signal transmis par le détecteur,
le modulateur de phase étant en rotation pendant l'acquisition des données,
le faisceau de signal et le faisceau de référence étant colinéaires mais spatialement séparés par des sections transversales différentes en au moins un point le long du faisceau,
le faisceau de signal étant transmis à travers la section externe du modulateur de phase et le faisceau de référence à travers sa section interne.
